# EUROPEAN PATENT SPECIFICATION

(11) **EP 1 700 658 B1**
(45) Date of publication and mention of the grant of the patent: **01.10.2008**
(21) Application number: 06013608.2
(22) Date of filing: 07.06.2002
(51) Int. Cl.: B23D 45/04, B23D 45/02

(54) **Sliding Saw**
Kapp- und Gehrungssäge
Scies à onglets coulissantes

(43) Date of publication of application: 13.09.2006
(62) Divisional of application: 02012713.0
(73) Proprietor: Makita Corporation, Anjo-shi, Aichi-ken (JP)
(72) Inventor: Higuchi, Hisashi, Anjo-shi Aichi-ken (JP)
(74) Representative: Kramer - Barske - Schmidtchen

(56) References cited:
- WO-A-83/03569
- US-A- 5 054 352
- US-A- 5 524 516
- PATENT ABSTRACTS OF JAPAN vol. 1999, no. 09, 30 July 1999 (1999-07-30) -& JP 11 090730 A (MAKITA CORP), 6 April 1999 (1999-04-06)

## Description

The present invention relates to a slide saw according to the preamble of independent claim 1, which saw generally includes a saw unit that can pivot vertically relative to a table surface and that can slide linearly relative to and along the table surface in order to cut a workpiece, and to a method of cutting a workpiece according to the preamble of independent claim 11.

Japanese Laid-open Publication No. 11-90730 and US Patent No. 5,054,352 teach slide compound saws, in which a saw unit having a circular saw blade can slide relative to a table surface via two slide bars. A workpiece (such as wood) is placed on the table surface, the saw unit is vertically moved (or pivoted) toward the workpiece, and then the saw unit is thereafter moved (or slid) in a direction parallel to the table surface. As a result, a workpiece having a relatively large width can be cut.

In addition, these known slide compound saws include a lock for releasably preventing the saw unit from displacing or sliding along the slide bars. In particular, the lock includes a fixing screw that is designed to abut or press against one of the slide bars. When the fixing screw securely abuts the slide bar, the saw unit can not slide or move linearly with respect to the table surface. However, the saw unit still can be vertically moved or pivoted towards the table surface in order to cut the workpiece. Thus, when the fixing screw securely abuts the slide bar, the slide compound saw functions as a usual power circular saw. On the other hand, when the fixing screw does not abut the slide bar, the saw unit can slide parallel to the table surface in order to cut a relatively wide workpiece.

WO 83/03569 A discloses a slide saw according to the preamble of claim 1 and a method for cutting a workpiece according to the preamble of claim 11.

It is an object of the present invention to provide slide saws that are more compact than the above-described known slide saws, as well as methods for using the same.
This object is achieved by the combination of features of independent claim 1 and the combination of features of independent claim 11, which respectively provide a slide saw and a method for using the same, in which the saw unit of the slide saw has an increased moving or sliding distance without an accompanying increase in the size of the table or the slide bars and at least two discrete slidable ranges are provided.
Further preferred embodiments of the invention are recited in the dependent claims 2-10, 12 and 13.
According to the present invention, slide saws are taught that include a table defining a table surface. The saw unit is pivotally coupled to the table and pivots vertically, and preferably at a bevel angle, relative to the table surface. A first slide mechanism includes a first slide bar and permits the saw unit to slide parallel, or substantially parallel, to the table surface in order cut a workpiece placed on the table. A sliding means is provided in order to extend the sliding distance or range of the saw unit relative to the table without requiring an increase in the length of the slide mechanism or the first slide bar. Thus, the movable distance of the saw unit relative to the table can be increased without increasing the size of the table or the first slide mechanism (e.g., including one or more first slide bars).

An arm support may serve to pivotally support the saw unit with respect to the table surface and/or the first slide mechanism (or first slide bar). The arm support is slidably coupled to the first slide bar or is coupled to a second slide bar. A second slide mechanism is preferably disposed in parallel with the first slide mechanism and the second slide mechanism can move or slide relative to the first slide mechanism.

According to the invention, the first slide bar slidably moves relative to the table. Further, the saw unit also is slidable relative to the first slide mechanism. Thus, two distinct or separate sliding ranges are provided by the first slide mechanism.

According to the invention, the first slide mechanism alternatively includes an inner slide bar that is slidably inserted into an outer slide bar. In this aspect, the first slide mechanism may provide a relatively long sliding distance while occupying a relatively small space (e.g., a relatively short linear distance).

Additional objects, features and advantages of the present invention will be readily understood after reading the following detailed description together with the claims and the accompanying drawings, in which:
FIG. 1 is a broken-away side view of a first representative slide compound saw;
FIG. 2 is a view similar to FIG. 1, but instead, showing the saw unit moved or shifted to its leftward position;
FIG. 3 is a plan view of FIG. 1, in which the saw unit and its associated support arm have been omitted for the purpose of illustration;
FIG. 4 is a vertical, cross-sectional view of a slide mechanism for a second representative slide compound saw;
FIG. 5 is a broken-away side view of a third representative slide compound saw;
FIG. 6 is a broken-away side view of a fourth representative slide compound saw;
FIG. 7 is a broken away plan view of FIG. 6;
FIG. 8 is a cross-sectional view of an alternative configuration of the slide mechanism of FIG. 4; and
FIG. 9 is a cross-sectional view of a further alternative configuration of the slide mechanism of FIG. 4.

In one embodiment of the present invention, a slide saw includes a table defining a table surface. A turntable optionally may be rotatably disposed within the table. A saw unit is vertically pivotable relative to the table surface. A first slide bar is coupled to the table (or turntable) and is disposed substantially in parallel with the table surface. The first slide bar defines a first sliding distance or range (S1 or A - a) of the saw unit relative to the table in a direction substantially parallel to the table surface. A sliding means slidably couples the first slide bar to the saw unit. That is, the sliding means permits the saw unit to slide relative to the first slide bar. In addition, the sliding means defines a second sliding distance (S2 or B - b) of the saw unit relative to the first slide bar in the direction substantially parallel to the table surface. In this embodiment, the saw unit is capable of sliding up to a distance S1 plus S2 (i.e., within a range of S1 plus S2) in the direction substantially parallel to the table surface.

An arm support may rotatably or pivotally support the saw unit relative to the table (or turntable) and the first slide bar. Optionally, the first slide bar may be disposed below the table surface, although the first slide bar also may be disposed above the table surface.

In an alternate embodiment, sliding means includes a second slide bar slidably and concentrically disposed within or around the first slide bar. In this case, the second slide bar can telescopically slide relative to the first slide bar (or vice versa) in order to permit the saw unit to slide relative to the table by a first slidable distance (i.e., within a first slidable range) of the first slide bar relative to the table (or turntable) and by a second slidable distance (i.e., within a second slidable range) of the second slide bar relative to the first slide bar.

Means may be provided for releasably locking the saw unit in a bevel cutting position relative to the table surface. A turntable may rotatably couple the first slide bar to the table, thereby enabling miter cutting operations. A slide compound saw may include a pair of first slide bars and/or a pair of second slide bars.

In another embodiment, a slide compound saw includes a table defining a table surface and a saw unit having a saw blade. A first slide bar may be slidably coupled to the table. A second slide bar slidably couples the first slide bar to the saw unit. The first slide bar is disposed substantially parallel to the second slide bar. In addition, the saw unit preferably slides in a direction substantially parallel to the table surface via the first and second slide bars.

An arm support is coupled (e.g., fixedly coupled or slidably coupled) to the second slide bar and may include means for laterally pivoting the saw unit relative to the table surface, thereby enabling bevel cutting operations. The second slide bar is slidably disposed within or around the first slide bar, such that the second slide bar telescopically extends from the first slide bar or vice versa.

In another embodiment, the second slide bar is slidably disposed within the arm support. At least two first slide bars extend substantially in parallel to each other. The arm support may include means (e.g., a hinge) for pivoting the saw unit towards the second slide bar (and the table surface). Means may be provided for laterally inclining the saw unit relative to the second slide bar (and the table surface) in order to enable bevel cutting operations.

In another embodiment, linear ball bearings may slidably support the first slide bar(s) and/or the second slide bar(s). A first set of stoppers may define a first discrete slidable distance (or range) of the first slide bar relative to the table and/or a second set of stoppers may define a second discrete slidable distance (or range) of the second slide bar relative to the arm support.

In another embodiment, the saw unit rotatably supports a circular saw blade. First and second slide mechanisms are arranged and constructed to permit the saw unit to move or slide in a direction substantially parallel to the table surface. A first slide bar is slidably supported by the table (or a turntable rotatably disposed within the table). An arm holder may support the saw unit and may be slidably coupled to the first slide bar. The first slide mechanism slidably couples the table (or the turntable) to the first slide bar and the second slide mechanism may slidably couple the first slide bar to the arm holder. Optionally, means (e.g., a hinge) also may be provided for pivoting the saw unit relative to the arm holder and/or for laterally inclining the saw unit relative to the arm holder in order to enable bevel cutting operations.

In another embodiment, a first slide bar is slidably supported by the table (or a turntable rotatably disposed within the table). The arm holder is slidably coupled to the first slide bar. A second slide bar may be supported on the arm holder. The saw unit may be coupled to the second slide bar. The first slide mechanism slidably couples the table (or a turntable) to the first slide bar and the second slide mechanism slidably couples the arm holder to the second slide bar. Optionally, means (e.g., a hinge) may be provided for pivoting the saw unit relative to the second slide bar and/or for laterally inclining the saw unit relative to the first slide bar in order to enable bevel cutting operations.

In another embodiment, a method for sliding a saw unit relative to a table (or turntable) to cut a workpiece taught. Such a method includes sliding a saw unit relative to the table (or turntable) along or within a first (discrete) slidable distance (or range) in a direction substantially parallel to a surface of the table. Optionally, the position of the first slide mechanism may then be fixed or locked relative to the table. A second slide mechanism is then slid relative to the first slide mechanism along or within a second (discrete) slidable distance (range) in substantially the same direction as the first slide mechanism (e.g., substantially parallel to the first slide mechanism). Further, the position of the second slide mechanism optionally may then be fixed or locked relative to the first slide mechanism.

In a preferred method, a first slide bar may be slid relative to the table (or turntable) along or within a first (discrete) slidable distance (or range) in a direction substantially parallel to a surface of the table. Then, the position of the first slide bar optionally may be fixed or locked relative to the table (or turntable). The saw unit may then be slid relative to a second slide mechanism (e.g. a second slide bar) along or within a second (discrete) slidable distance (or range) in substantially the same direction as the first slide bar (e.g., substantially parallel to the first slide bar). Further, the position of the saw unit optionally may be fixed or locked relative to the second slide mechanism (or second slide bar).

Representative examples of the present invention, which examples utilize many of these additional features and teachings both separately and in conjunction, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detail description may not be necessary to practice the invention in the broadest sense, and are instead taught merely to particularly describe representative examples of the invention.

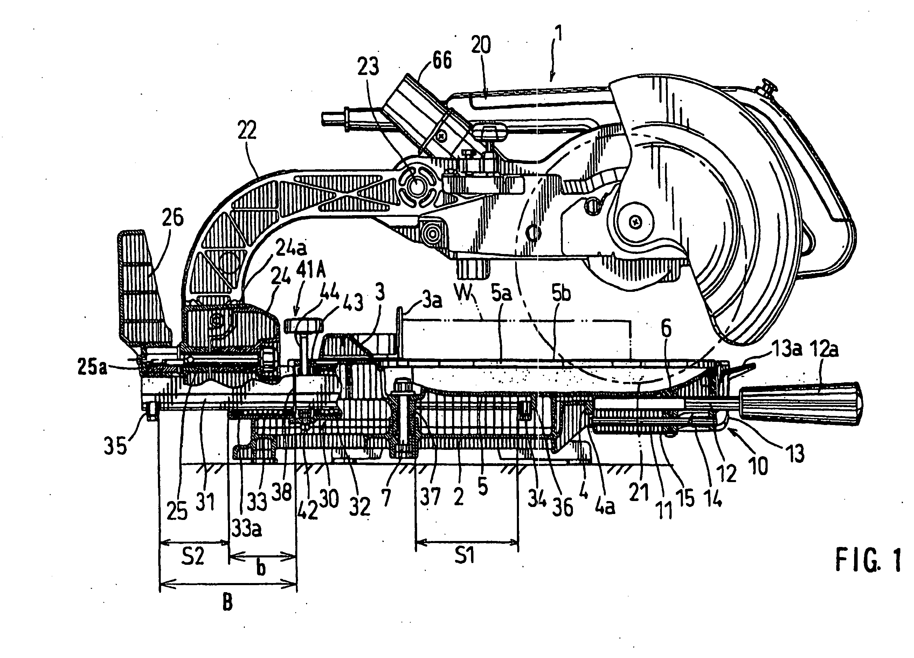

A first representative embodiment of a slide compound saw 1 according to the present teachings will now be described with reference to FIGS. 1 to 3. As shown in FIGS. 1 to 3, slide compound saw 1 may generally include a base 2, a table 3b and a turntable 5 rotatably mounted on or within the base 2 and/or table 3b. Preferably, an upper surface 5b of the turntable is flush (or substantially flush) with the upper surface of the table 3b. A circular saw unit 20 may be pivotally disposed above the turntable 5.

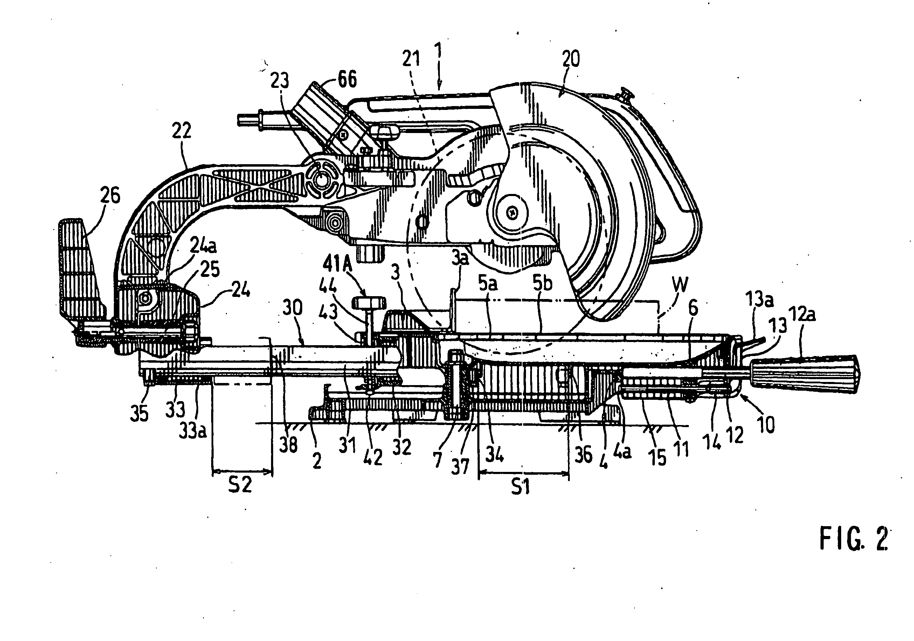

The circular saw unit 20 is preferably designed to cut a workpiece W that is supported by the table 3b and/or the turntable 5. For example, the workpiece W may be placed on the upper surface 5b of the turntable 5 and one side of the workpiece W preferably contacts a substantially vertically-oriented surface 3a of a fence 3. That is, the fence 3 preferably extends substantially perpendicularly from the table surface and the turntable surface 5b. Then, a workpiece holder or vice (not shown) optionally may fixedly hold or retain the workpiece W against the upper surface of the table 3b, so that the workpiece W can be fixed in position relative to the table 3b. With the workpiece W thus fixed in position, the workpiece W can be cut by a circular saw 21 that is rotatably mounted within the saw unit 20 and is rotatably driven by a motor (not shown). In FIGS. 1 and 2, the saw unit 20 is shown in the lowermost pivot (i.e., cutting) position.

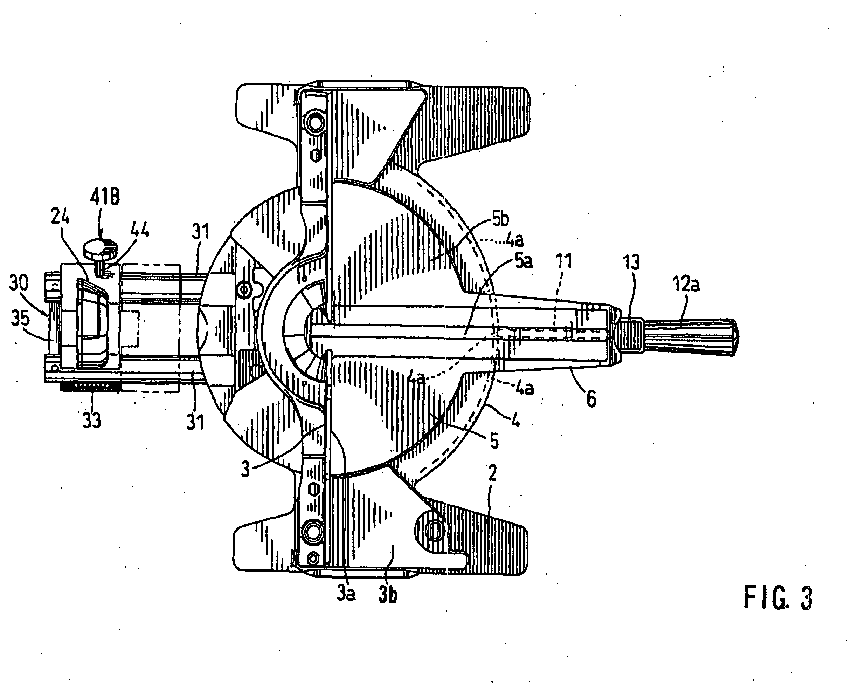

A blade receiving slot 5a is preferably defined within the turntable 5 for receiving a lower portion of the saw blade 21 during the cutting operation of the workpiece W. As shown in FIG. 3, the blade receiving slot 5a may be at least partially defined within a turntable extension 6 that radially extends outward from the outer periphery of the turntable 5. As also shown in FIG. 3, the fence 3 may be separated into two discrete portions and the two fence portions are preferably disposed on respective sides of the blade receiving slot 5a.

In one application of saw 1, the blade surface of saw blade 21 may be positioned so as to extend substantially perpendicular to the vertically-oriented surface 3a of the fence 3. Therefore, the workpiece W can be cut in a direction perpendicular to the longitudinal direction of the workpiece W. In an optional embodiment, the turntable 5 and the saw unit 20 are preferably designed to rotate together relative to the fence 3. Therefore, an oblique or miter cutting operation can be performed so as to cut the workpiece W obliquely relative to the longitudinal direction of the workpiece W.

In order to enable the oblique or miter cutting operation, the rotational center of the turntable 5 may be positioned just below the central point of the vertically-oriented surface 3a. Thus, as shown in FIGS. 1 and 2, the turntable 5 can rotate about a vertical support shaft 7 that may be positioned below the central point. In this case, the cut angle of the workpiece W may be changed in response to the rotational position of the turntable 5 and the saw unit 20 relative to the vertically-oriented surface 3a of the fence 3.

A turntable lock 10 may serve to releasably fix the turntable 5 in position relative to the base 2 and the table 3b. The turntable lock 10 may include a first lock pin 11 and a second lock pin 12. The first lock pin 11 may serve as a positive lock pin for setting the rotational position of the turntable 5 relative to the base 2. Preferably, a plurality of predetermined rotational positions may be spaced at predetermined angular intervals. For example, as shown in FIG. 3, the base 2 may include a side wall 4 that has a substantially semicircular configuration with respect to the support shaft 7. A plurality of notches 4a may be defined within the side wall 4 at predetermined intervals in the circumferential or peripheral direction. The predetermined intervals may be, e.g., regularly spaced intervals or may be intervals that correspond to the most common angular (miter) cuts performed by the saw 1. When the operator has selected the desired rotational (miter) position, the second lock pin 12 may serve to releasably fix the turntable 5 in the selected (miter) position.

As shown in FIGS. 1 and 2, a spring 14 may bias the first lock pin 11 toward the side wall 4. In this case, the biasing force of the spring 14 will cause the first lock pin 11 to engage the respective notches 4a. An operation lever 13 may include a tab or flange 13a that is operably coupled to the first lock pin 11. Thus, when the operator downwardly presses the tab 13a, the first lock pin 11 is withdrawn or removed from the notches 4a against the biasing force of the spring 14.

The second lock pin 12 may threadably engage the turntable 5. In this case, by rotating the second lock pin 12 in a first direction, the second lock pin 12 will press against the side wall 4 via a pressing plate 15. Therefore, the rotational position of the turntable 5 can be locked with respect to the base 2 and table 3b. The locked state of the turntable 5 can be released by rotating the second lock pin 12 in the opposite (second) direction.

A representative structure for mounting or supporting the saw unit 20 on the turntable 5 will now be described. Referring to FIG. 3, a pair of parallel slide bars (e.g., first slide bars) 31 are slidably coupled to the turntable 5 and extend substantially in the horizontal direction. That is, the slide bars 31 preferably extend in a direction that is substantially perpendicular to the vertically-oriented surface 3a. As shown in FIGS. 1 and 2, the left-side portions of the slide bars 31 are slidably coupled to an arm support 24. Further, an arm 22 is supported on the arm support 24 and the saw unit 20 is supported by the arm 22. Although two slide bars 31 are utilized in the first representative embodiment, only one slide bar 31 is necessary to provide the function of enabling the saw unit 20 to slide relative to the base 2 and the table 3b.

The arm 22 may extend or project over the slide bars 31 toward a position above the turntable 5. A support rod 23 may be disposed within a front end portion of the arm 22 and the saw unit 20 may pivot about the support rod 23. Thus, the support rod 23 may serve as a hinge and the saw unit 20 can pivot or rotate about the hinge. A return spring (not shown in the first representative embodiment) normally biases the saw unit 20 toward in an uppermost or resting position (an upper stroke end). Therefore, in order to cut a workpiece W, the operator will typically move or pivot the saw unit 20 downward from the uppermost position against the biasing force of the return spring.

In order to enable a bevel cutting operation of the workpiece W (i.e., the saw blade 21 is laterally inclined from a vertically-oriented position relative to the upper surface 5b of the turntable 5), a horizontally-disposed rod 25 may be utilized to permit the arm 22 to pivot laterally relative to the arm support 24. Further, an arc-shaped guide surface 24a may be defined on the arm support 24 about the pivotal axis of the arm 22 Therefore, pivotal movement of the arm 22 relative to the arm support 24 can be prevented when the arm 22 is slidably supported by the arc-shaped guide surface 24a. Optionally, the axis of the horizontally-disposed rod 25 may be positioned, e.g., above the upper surface 5b of the turntable 5 and may be substantially aligned, e.g., with the blade slot 5a.

The horizontally-disposed rod 25 may threadably engage a threaded hole 25a defined within the lower end portion of the arm 22. An operation lever 26 may be attached to one end of the horizontally-disposed rod 25. Therefore, by rotating the operation lever 26 and thus the horizontally-disposed rod 25 in one direction, the arm 22 can be fixed or locked in position relative to the arm support 24. When the horizontally-disposed rod 25 is rotated in the opposite direction, the arm 22 will be released and will be free to pivot relative to the arm support 24.

A first slide mechanism 30 enables the saw unit 20 to linearly move or slide in a direction parallel, or substantially parallel, to the upper surface 5b of the turntable 5 within a first slidable distance (S1). The pair of parallel slide bars 31 are included within the slide mechanism 30. A pair of first bearing members 32 may slidably support the respective front portions of the slide bars 31 with respect to the turntable 5. For example, the first bearing members 32 may be disposed within the turntable 5 (i.e., below the upper surface 5b of the turntable 5). In this case, the slide bars 31 will slide below the upper surface 5b of the turntable 5. However, in the alternative, the slide bars 31 and the first bearing members 32 also may be disposed above the turntable surface 5b. In either case, the first bearing members 32 preferably include a pair of linear ball bearings for slidably receiving the respective slide bars 31. Thus, the first bearing members 32 may be linear slide bearings.

The arm support 24 may extend between or across the rear end portions of the slide bars 31. A pair of second bearing members 33 are disposed within the arm support 24. The second bearing members 33 may include a pair of linear ball bearings that slidably receive the rear end portions of the respective slide bars 31. Thus, the second bearing members 33 also may be linear slide bearings and slidably support the arm support 24 with respect to the slide bars 31.

Optionally, each of the slide bars 31 may have a circular, or substantially circular, cross section, although the slide bars 31 may have other configurations. A front tie bar 34 may join the front end portions of the slide bars 31 and a rear tie bar 35 may join the rear end portions of the slide bars 31. Front and rear stoppers 36 and 37 may be defined within the turntable 5 so as contact the front tie bar 34 and define a first (discrete) movable (slidable) range (S1) of the slide bars 31. That is, the distance between the front and rear stoppers 36 and 37 of the first slide mechanism 30 may define the movable or slidable distance (S1) in this embodiment. However, if the first bearing member 32 is optionally disposed between the first and second stoppers 36 and 37 (not shown), then the slidable distance (S1) will be defined by the distance between the first and second stoppers 36 and 37 minus the length of the first bearing member 32.

The rear stopper 37 may be defined on a boss portion of the turntable 5 that receives the vertically disposed shaft 7. On the other hand, the rear tie bar 35 and stopper rings 38 may be attached to the slide bars 31 at a substantially middle position along the axial direction of the slide bars 31. A second (discrete) movable (slidable) range (S2) of the arm support 24 relative to the slide bars 31 is defined by the distance (B) between the rear tie bar 35 and the stopper rings 38 minus the length (b) of the second bearing members 33, because the second bearing members 33 are disposed within the maximum slidable distance (B) of the arm holder 24 relative to the slide bars 31. The second bearing members 33 optionally may be disposed within an outer casing 33a that has a front end (right end as viewed in FIG. 2) that opposes or faces the stopper ring 38 and a rear end (left end as viewed in FIG. 2) that opposes or faces the rear tie bar 35.

Thus, according to the first representative embodiment, the saw unit 20 can move in the horizontal (parallel) direction relative to the turntable 5 along two distinct (i.e., physically separated) sliding ranges. That is, the slide bars 31 may move or slide relative to the turntable 5 within the first slidable range (S1) and the arm support 24 can further move or slide relative to the slide bars 31 within the second slidable range (S2). Thus, the slide bar 31 can move or slide up to a distance S1 relative to the turntable 5, and the arm support 24 can move or slide up to a distance S2 relative to the slide bars 31, as shown in FIGS. 1 and 2.

As a result, the combined sliding distance can be increased (e.g., up to S1 plus S2) while still maintaining a compact configuration for the saw 1. That is, it is not necessary to increase the length of slide bars 31 in order to provide a longer sliding range. Further, the sliding movement may be performed in two discrete steps (i.e., first sliding by or up to the distance S1, stopping the sliding movement and then sliding by or up to the distance S2) or the sliding movement along or within the distance S1 plus S2 may be performed in one continuous motion.

Optionally, a first lock mechanism 41A may serve to fix the position of the slide bars 31 relative to the turntable 5. In addition, a second lock mechanism 41B may serve to fix the arm holder 24 in position relative to the slide bars 31. Thus, the position of the saw unit 20 relative to the turntable 5 in the longitudinal direction of the slide bars 31 may be fixed by the first and second lock mechanisms 41A and 41B. Because the first and second lock mechanisms 41A and 41B may be constructed in substantially the same manner, it is only necessary to describe the first lock mechanism 41A in further detail.

The first lock mechanism 41A may include an auxiliary ring 43 that is slidably fitted onto one of the slide bars 31. A stopper screw 42 may be inserted into the turntable 5 from the lower side. In addition, the stopper screw 42 may be screwed or threaded into the auxiliary ring 43 in the diametrical or radial direction so as to fix the auxiliary ring 43 in position relative to the turntable 5. A lock screw 44 may be inserted into the turntable 5 from the upper side and may be screwed into the auxiliary ring 43 in a position opposite to the stopper screw 42. Thus, when the lock screw 44 is tightened, the end or tip portion of the lock screw 44 can abut or contact the outer surface of the slide bar 31, so that the slide bars 31 can be releasably fixed or locked in position relative to the turntable 5.

As noted above, the second lock mechanism 41B may have substantially the same construction as the first lock mechanism 41A. Therefore, the arm support 24 can be fixed in position relative to the slide bars 31 by tightening a lock screw 44 of the second lock mechanism 41 B.

As described above, according to the first representative embodiment, the saw unit 20 may linearly move or slide relative to the turntable 5 along (1) a distance S1 by sliding the slide bars 31 relative to the turntable 5 and (2) a further distance S2 by sliding the arm support 24 relative to the slide bars 31. Therefore, in order to cut a workpiece W set onto the turntable 5, the operator may first pivot the saw unit 20 downward about the support shaft 23 to cut the front portion of the workpiece W. In this step, the saw unit 20 is preferably positioned at the forward most position (rightmost position as viewed in FIG. 1). The operator may then push the saw unit 20 rearward (leftward as viewed in FIG. 1), so that the workpiece W can be cut along the entire length of the workpiece W in the forward and rearward directions.

As noted above, the saw unit 20 can move or slide by (or up to) the combined distance (S1 + S2), in which the distance S1 is the movable or slidable distance of slide bars 31 relative to turntable 5 and the distance S2 is the movable or slidable distance of arm support 24 relative to the slide bars 31. Thus, two discrete slidable ranges are provided in the first representative embodiment.

Consequently, the movable range of the saw unit 20 may be increased as compared to known compound saws that do not provide the movable or slidable distance S2. Thus, if the movable distance S1 is set to be the same distance as known compound saws, the saw unit 20 may further move or slide by the distance S2 (i.e., the movable distance of the arm support 24 relative to the slide bars 31), as compared to known compound saws. Naturally, the length of blade slot 5a is preferably defined to be at least about the combined slidable distance S1 plus S2. Consequently, the movable or slidable distance of the saw unit 20 may be increased without increasing the size of the turntable 5, although it may be appropriate to extend the length of the turntable extension 6 in order to provide sufficient length for blade slot 5a. In the alternative, the size or length of the compound saw 1 (e.g., slide bars 31) may be reduced while still providing the same movable or slidable range of the saw unit 20 as known compound saws.

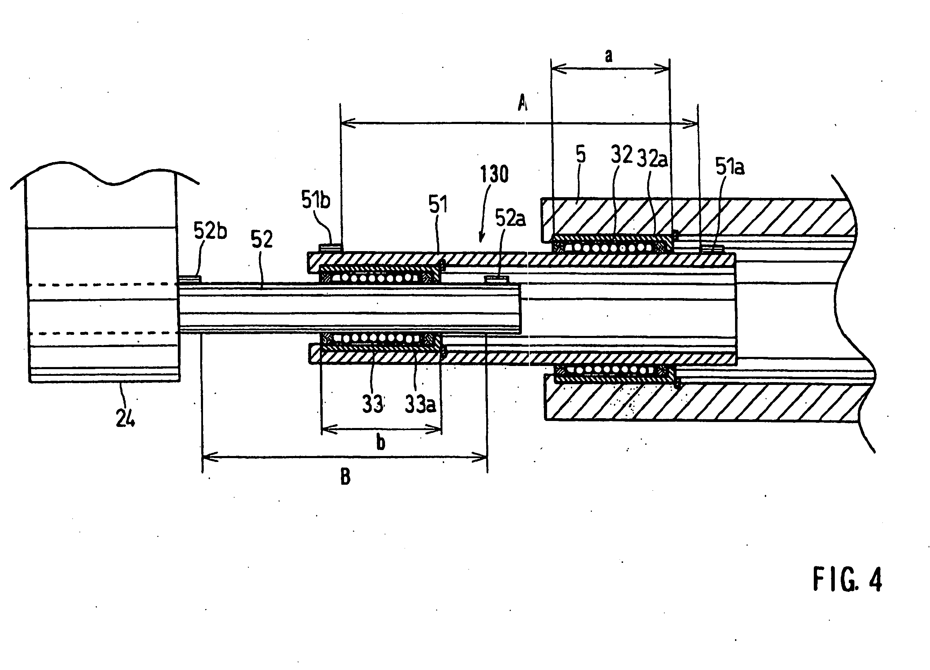

A second representative first slide mechanism 130 will now be described with reference to FIG. 4, in which the same reference numerals are utilized for the same elements as FIGS. 1-3. Because the first slide mechanism 130 may be utilized with the saw 1 of FIGS 1-3, a complete description of a saw including first slide mechanism 130 is not necessary.

The second representative first slide mechanism 130 may include a pair of first slide bars 51, which are preferably disposed in parallel. The first slide bars 51 preferably may be substantially hollow and cylindrical in cross section, although other configurations are, of course, possible with the present teachings. The front ends (right ends as viewed in FIG. 4) of the first slide bars 51 are slidably mounted within the turntable 5 and may be slidably supported by first bearing members 32, which may include linear ball bearings as in the first representative embodiment.

A pair of second slide bars 52 preferably may have either a hollow or a solid cylindrical configuration, although other configurations are, of course, possible with the present teachings. The front ends (right ends as viewed in FIG. 4) of the second slide bars 52 are slidably inserted into or received within the respective first slide bars 51 via second bearing members 33, which also may include linear ball bearings as in the first representative embodiment. Thus, the first slide bars 51 are concentrically disposed with respect to the second slide bars 52. The arm support 24 may be fixedly or rotatably secured to the rear ends of the second slide bars 52. Optionally, the arm support 24 may be slidably supported by the second slide bars 52 in a manner similar to the arm support 24 of the first representative embodiment in order to provide an additional sliding range (S3) of arm support 24 (and thus saw unit 20) relative to the second slide bars 52.

Front and rear stoppers 51a and 51b may be attached to the outer periphery of each of the first slide bars 51. Further, the front and rear stoppers 51a and 51b may respectively oppose the front and rear ends of the outer casing 32a of the first bearing member 32 along the longitudinal direction of the first slide bars 51. The front and rear stoppers 51a and 51b define the maximum slidable distance (A) along the first slide bar 51. The length (a) of the first bearing member 32 must be subtracted from (A) in order to obtain the first movable or slidable range (S1) for the second representative embodiment. In other words, the first movable or slidable range (S1) of the first slide bars 51 relative to the turntable 5 may be defined as (A) - (a), i.e., the distance (A) between the front and rear stoppers 51a and 51b minus the length (a) of the first bearing member 32.

Similarly, front and rear stoppers 52a and 52b may be attached to or defined along the outer periphery of each of the second slide bars 52. Further, the front and rear stoppers 52a and 52b may respectively oppose the front and rear ends of the outer casing 33a of the second bearing member 33 along the longitudinal direction of the second slide bars 52. The front and rear stoppers 52a and 52b define the maximum slidable distance (B) along the second slide bar 52. The length (b) of the first bearing member 33 must be subtracted from the distance (B) in order to obtain the second movable or slidable range (S2) for the second representative embodiment. In other words, the second movable or slidable range (S2) of the second slide bar 52 relative to the turntable 5 may be defined as (B) - (b), i.e., the distance (B) between the front and rear stoppers 52a and 52b minus the length (b) of the second bearing member 33.

Similar to the first representative embodiment, the saw unit 20 of the second representative embodiment may be linearly moved or slid up to or within a combined distance (range) of S1 plus S2, because the first slide bars 51 can slide or move by a distance or range S1 relative to the turntable 5 and the second slide bars 52 can slide or move by a distance or range S2 relative to the first slide bars 51. Thus, in the second representative embodiment as well, the saw unit 20 can move in the horizontal (parallel) direction relative to the turntable 5 along two discrete slidable or movable ranges. Optionally, if the arm support 24 is slidably coupled to the second slide bars 52, as in the first representative embodiment, a third slidable range (S3) will be provided.

As a result, the combined sliding distance can be increased (e.g., at least up to S1 plus S2) while still maintaining a compact configuration for the saw 1. That is, it is not necessary to increase the length of slide bars 51 in order to provide a longer sliding range. Further, as in the first representative embodiment, the sliding movement may be performed in two discrete steps (i.e., first sliding by or up to the distance S1, stopping the sliding movement and then sliding by or up to the distance S2) or the sliding movement along or within the distance (range) S1 plus S2 (or S1 plus S2 plus optionally S3) may be performed in one continuous motion.

In the second representative embodiment, as the second slide bars 52 are inserted into the respective tubular-shaped, first slide bars 51, the saw unit 20 can telescopically extend and retract with respect to the turntable 5. Consequently, the first slide mechanism 130 has a relatively compact construction and may occupy a smaller space than the first slide mechanism 30 of the first representative embodiment.

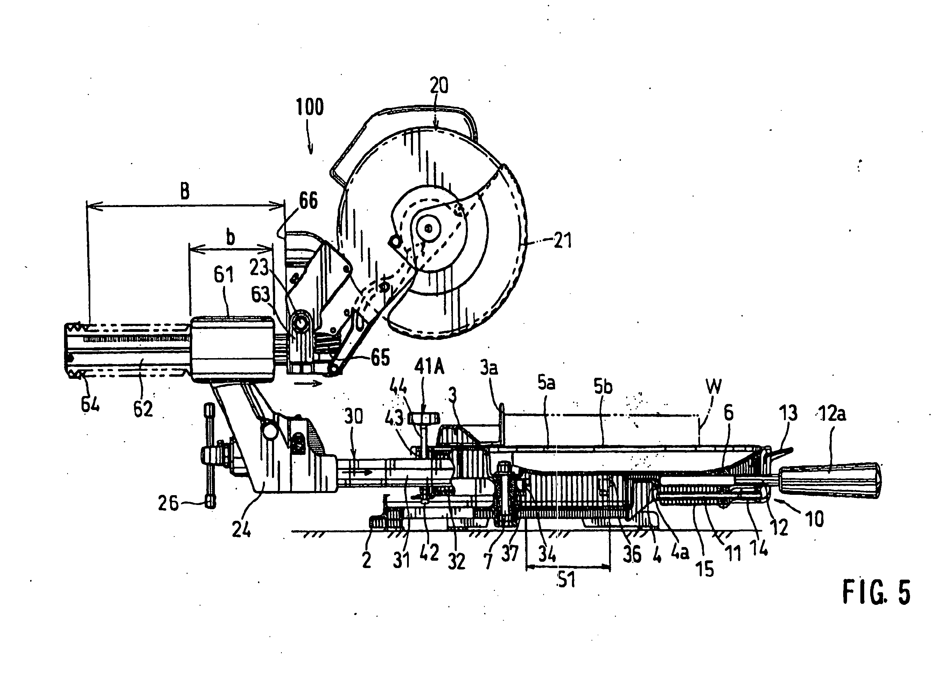

A third representative embodiment will now be described with reference to FIG. 5, in which the same reference numerals will be utilized.for the same elements as the first and second representative embodiments. The slide compound saw 100 of the third representative embodiment is similar to the first representative embodiment in that the arm support 24 is slidably coupled to the the (first) slide bars 31. However, in this embodiment, a slide support 61 and a pair of upper (second) slider bars 62 slidably support the saw unit 20 with respect to the arm support 24. In the same manner as the first representative embodiment, the front ends of the (first) slide bars 31 may be slidably mounted within the turntable 5, and the first lock mechanism 41A may serve to releasably fix the position of the slide bars 31 relative to the turntable 5.

Although not shown in FIG. 5, a second bearing member and a second lock mechanism may be respectively utilized in a manner similar to the second bearing member 33 and the second lock mechanism 41B (including the auxiliary ring 43) of the first representative embodiment. For example, a second bearing member may be disposed within the slide support 61 in order to slidably support the upper slide bars 62. In this case, the upper slide bars 62 can slide horizontally relative to the arm support 24 and can be releasably fixed or locked in position relative to the arm support 24.

In addition, stoppers (not numbered) may be attached to or defined on the upper slide bars 62 in order to define the maximum movable or slidable distance (B) of the upper slide bars 62. In order to determine the movable or slidable range (S2) of the upper slide bars 62 relative to the arm support 24, the length (b) of the arm support 24 must be subtracted from the distance (B). Thus, the movable or slidable range (S2) of the upper slide bars 62 relative to the arm support 24 may be defined as (B) - (b), i.e., the distance (B) between the stoppers disposed on the upper slide bars 62 minus the length (b) of the slide support 61. The movable or slidable range (S1) of the first slide bars 31 relative to the turntable 5 can be defined simply as the distance between the stoppers 36 and 37 defined within the turntable 5., because the first bearing member 32 is not disposed between the stoppers in this embodiment.

Optionally, the respective rear portions of the upper slide bars 62 may be covered by a bellows-like dust cover 64 that can expand and contract. For example, the front end of the dust cover 64 may be attached to the rear end of the slide support 61 and the rear end of the dust cover 64 may be attached to the rear end of the corresponding upper slide bars 62.

A bracket 63 may be attached to the front ends of the upper slide bars 62. Further, the support rod 23 and the bracket 63 may pivotally support the saw unit 20. That is, the saw unit 20 may pivot or rotate towards the workpiece W via the bracket 63 and the support rod 23 (collectively, a hinge). Further, a return (coil) spring 65 may upwardly bias the saw unit 20 toward the uppermost or resting position. A dust duct 66 may be provided to direct dust away from the upper surface 5b and into, e.g., a dust collection receptacle (not shown).

According to the third representative embodiment, the saw unit 20 can move or slide by a distance S1 plus S2 plus S3. That is, the (first) slide bars 31 can move or slide relative to the turntable 5 by the distance S1 and the upper (second) slide bars 62 can move or slide relative to the arm support 24 by the distance S2. Thus, in the third representative embodiment, the saw unit 20 can move or slide relative to the turntable 5 by the sum (S1 + S2) of the movable distance S1 of the slider bars 31 relative to the turntable 5 and the movable distance S2 of the upper slide bars 62 relative to the arm support 24. . In addition, because the arm support 24 is slidably coupled to the slide bars 31, as in the first representative embodiment, a third slidable range (S3) of the arm support 24 relative to the slide bars 31 is defined. Therefore, also in the third representative embodiment, the saw unit 20 can slide along a relatively large distance without increasing the size of the turntable 5.

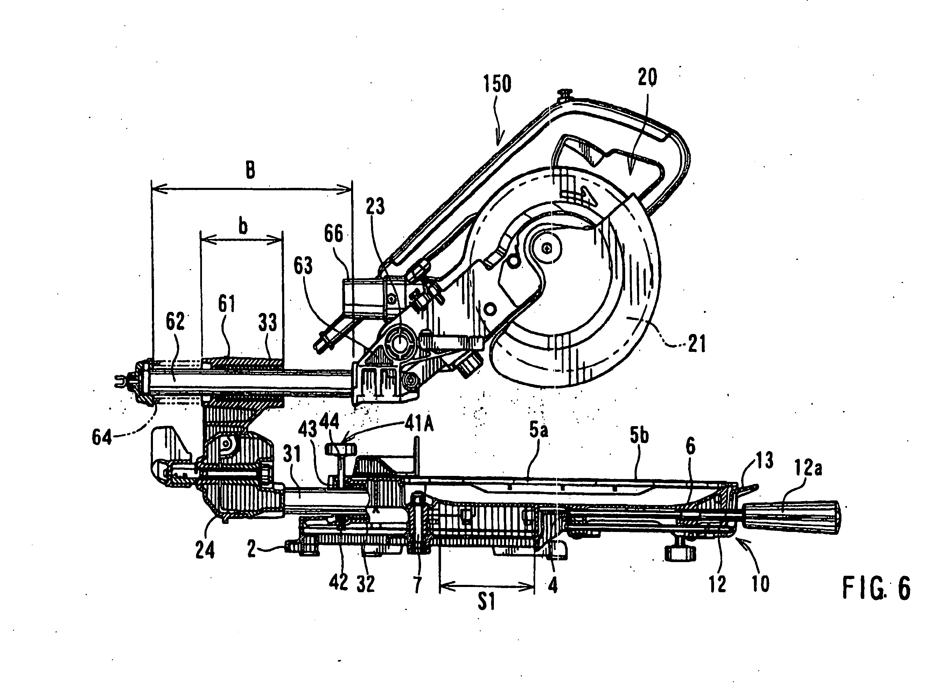

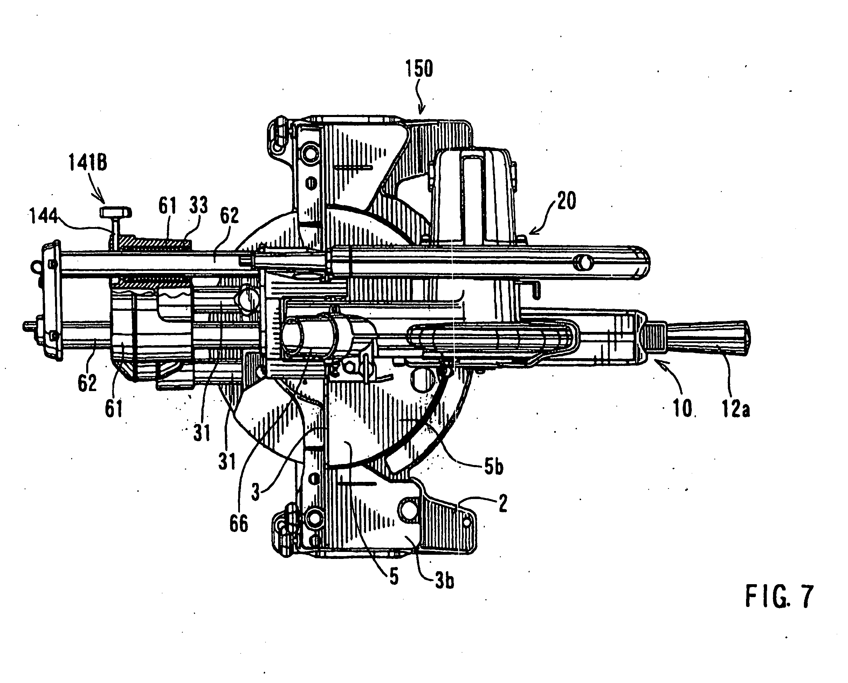

FIGS. 6 and 7 show a slide compound saw 150 according to a fourth representative embodiment, which is a modification of the third representative embodiment. Like elements will therefore be given the same reference numerals as the third representative embodiment. As shown in FIG. 7, the fourth representative embodiment includes a second lock mechanism 141B. However, the second lock mechanism 141B does not incorporate the auxiliary ring 43 as in the second lock mechanism 41b of the first and second representative embodiments. Instead, the second lock mechanism 141B may include a lock screw 144 that directly engages or abuts the corresponding upper slide bar 62 without an intervening auxiliary ring. The upper slide bar(s) 62 preferably is (are) slidably disposed within second bearing mechanism 33.

This modification is advantageous because the second lock mechanism 141B can be manufactured at a lower cost than the lock mechanisms 41A or 41B. For example, slide compound saws according to the present teachings may optionally utilize the second lock mechanism 141B to prevent the arm support 24 from moving or sliding in the axial (longitudinal) direction relative to the upper slide support 61. On the other hand, the first lock mechanism 41A must bear the torsional force that is applied to the slide bars 31 when a bevel cutting operation is performed with the saw unit 20 disposed in a position inclined from the vertical orientation. Therefore, the first lock mechanism 41A is preferably sufficiently resilient to withstand this force.

The arm support 24 of the fourth representative embodiment also is slidably coupled to the slide bars 31, as in the first and third representative embodiments, in order to define a third slidable range (S3) of the arm support 24 relative to the slide bars 31.

Although the above representative embodiments have been described in connection with circular slide compound saws that provide both oblique (miter) and bevel cutting functions, the present teachings also may be applied to other types of slide saws that do not provide these functions. For example, the present teachings may be applied to slide saws that include only a miter cutting function or only a bevel cutting function. Naturally, neither the miter function nor the bevel function is required according to the present teachings.

In addition, the number and the cross-sectional configuration of the first and second slide bars 31, 51, 52 or 62 may be selectively and suitably determined For example, the present teachings are not limited to cylindrical-shaped slide bars, as polygonal-shaped bars (e.g., rectangular-shaped bars) also may be utilized. In addition, as noted in the second, third and fourth representative embodiments, the saw unit 20 may move or slide along three or more discrete slidable ranges. That is, three or more sets of sliding distances (e.g., S1, S2 and S3) optionally made be utilized with the present teachings.

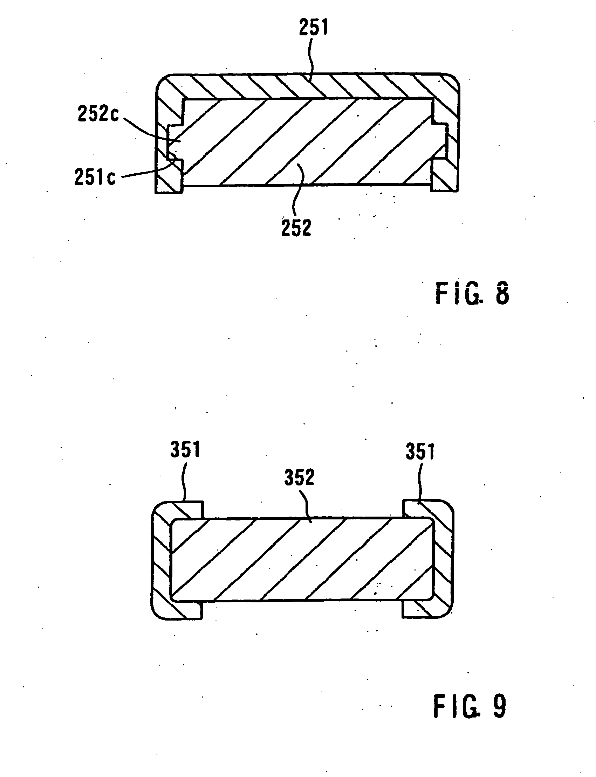

Further, as noted in the second representative embodiment, the first slide bars 51 may have a hollow and cylindrical configuration and the second slide bars 52 may have a hollow or solid cylindrical configuration. However, variety of configurations for the first and second slide bars 51 and 52 may be utilized. For example, as shown in FIG. 8, a slide bar 251 (i.e., corresponding to the first slide bar 51) may have a substantially inverted U-shaped configuration in cross section. In addition, a slide bar 252 (i.e., corresponding to the second slide bar 52) may have a substantially rectangular configuration in cross section. Preferably, the configuration of slide bar 252 corresponds, or substantially corresponds, to the inner peripheral configuration of the slide bar 251. Thus, in this case as well, the slide bar 252 can telescopically project from the slide bar 251.

In another representative modification of the present teachings, a pair of recesses 251c may be defined within the lateral inner surfaces of the slide bar 251. The recesses 251c may oppose or face each other. A projection 252c may be extend from each lateral surface of the slide bar 252 in order to slidably engage the corresponding recesses 251c of the slide bar 251. Therefore, the slide bar 251 can slide relative to the slide bar 252 along the longitudinal direction guided by the projections 252c and recesses 251c.

In the alternative, as shown in FIG. 9, a pair of slide bars 351 (i.e., corresponding to the first slide bar 51) may have a substantially C-shaped configuration in cross section. Further, a slide bar 352 (i.e., corresponding to the second slide bar 52) may have a substantially rectangular configuration and may be slidably received between the slide bars 351. Therefore, the slide bar 351 can slide relative to the slide bar 352 along the longitudinal direction

Furthermore, it is noted that the arm support 24 of the third representative embodiment can slide relative to the turntable 5 via the slide bars 31 and the saw unit 20 can slide relative to the arm support 24 via the upper slide bars 62. As discussed above, the two-step movable construction between the arm support 24 and the turntable 5 as in the first or second representative embodiments is also incorporated into the third or fourth representative embodiments in order to provide three or more discrete moveable or slidable distances (ranges).

## Claims

1. A slide saw (1; 100; 150); comprising:
a table (3b) defining a table surface (5b),
a saw unit (20) vertically pivotable relative to the table surface,
a first slide mechanism (30; 130) comprising a first slide bar (31; 51; 251; 351) coupling the saw unit to the table, the first slide bar being disposed substantially in parallel with the table surface, wherein the first slide bar defines a first slidable range of the saw unit in a direction substantially parallel to the table surface, and
sliding means (24, 33; 24, 33, 52; 252; 352) for slidably coupling the first slide bar to the saw unit, wherein the sliding means defines a second slidable range of the saw unit in the direction substantially parallel to the table surface,
**characterized in that**:
the first slide mechanism (30; 130) is adapted to permit the saw unit (20) to slide parallel, or substantially parallel, to the table surface (5b) within the first slidable range in order to cut a workpiece (W) placed on the table (3b), and
either the sliding means (24, 33, 52; 252; 352) comprises a second slide bar (52; 252; 352) slidably disposed within or around the first slide bar (51; 251; 351) and an arm support (24) couples the second slide bar to the saw unit or the sliding means (24, 33) comprises an arm support (24) slidably coupled to the first slide bar (31),
such that, for cutting the workpiece, the saw unit is slidable within a total slidable range of at least the first slidable range plus the second slidable range in the direction substantially parallel to the table surface.

2. A slide saw (1; 100; 150) as in claim 1, wherein the arm support (24) pivotally supports the saw unit (20).

3. A slide saw (1) as in claim 2, wherein the sliding means (24, 33, 52; 252; 352) comprises the second slide bar (52; 252; 352) slidably disposed within or around the first slide bar (51; 251; 351) and the arm support (24) is fixedly, rotatably or slidably secured to the rear end of the second slide bar.

4. A slide saw (1; 100; 150) as in any previous claim, wherein one first slide bar (31; 51; 251; 351) or two, parallel first slide bars (31; 51; 251; 351) is/are linearly slidable below the table surface (5b).

5. A slide saw (1; 100; 150) as in any previous claim, wherein the sliding means (24, 33; 24, 33, 52) further comprises means (25, 26) for releasably locking the saw unit (20) in a bevel cutting position relative to the table surface (5b).

6. A slide saw (1; 100; 150) as in any previous claim, further comprising a turntable (5) disposed within the table (3b) and rotatably coupling the first slide bar(s) (31; 51; 251; 351) to the table.

7. A slide saw (1; 100; 150) as in claim 6, wherein:
if the sliding means (24, 33) comprises an arm support (24) slidably coupled to the first slide bar (31), front and rear stoppers (36, 37) are defined within the turntable (5) and the distance between the first and second stoppers (36, 37) defines the first slidable range or, if a first bearing member (32) is optionally disposed between the first and second stoppers (36, 37), then the first slidable range is defined by the distance between the first and second stoppers minus the length of the first bearing member,
or, if the sliding means (24, 33, 52; 252; 352) comprises a second slide bar (52; 252; 352) slidably disposed within or around the first slide bar (51; 251; 351) and an arm support (24) couples the second slide bar to the saw unit, front and rear stoppers (51a, 51b) are attached to the outer periphery of the first slide bar(s) (51) and the first slidable range is defined by the distance between the first and second stoppers (51a,51b) minus the length of a first bearing member (32) disposed between the first and second stoppers.

8. A slide saw (1; 100; 150) as in any previous claim, further comprising a hinge (23) pivotally coupling the saw unit (20) to the sliding means (24, 33; 24, 33, 52).

9. A slide saw (1; 100; 150) as in any previous claim, further comprising means (41B) for releasably locking the first slide bar(s) (31) relative to the sliding means (24, 33).

10. A slide saw (1; 100; 150) as in any previous claim, further comprising means (24, 33, 52; 24, 33, 61, 62) for defining a third sliding range between the saw unit (20) and the table (5b).

11. A method for cutting a workpiece (W) disposed on a table (3b), comprising:
sliding a saw unit (20) via a first slide mechanism (30; 130) comprising a first slide bar (31; 51; 251; 351) relative to the table in a direction substantially parallel to a surface (5b) of the table, wherein the first slide bar (31; 51; 251; 351) defines a first discrete slidable range of the saw unit (20) in the direction substantially parallel to the table surface,
**characterized in that**:
the first slide mechanism (30; 130) permits the saw unit (20) to slide parallel, or substantially parallel, to the table surface (5b) within the first discrete sliding range in order to cut the workpiece (W), and
the method further comprises:
sliding a sliding means (24, 33; 24, 33, 52; 252; 352) relative to the first slide mechanism (30; 130) in substantially the same direction as the first slide mechanism within a second discrete sliding range by either sliding a second slide bar (52; 252; 352), which is disposed within or around the first slide bar (51; 251; 351), relative to the first slide bar or by sliding an arm support (24), which is slidably coupled to the first slide bar (31), relative to the first slide bar, such that, the workpiece is cut by sliding the saw unit within a total slidable range of at least the first slidable range plus the second slidable range in the direction substantially parallel to the table surface.

12. A method as in claim 11, further comprising:
after sliding the saw unit (20) relative to the table (3b) in the direction substantially parallel to the table surface (5b) within the first discrete sliding range, releasably locking (41 A) the position of the first slide mechanism (30) or the first slide bar (31) relative to the table.

13. A method as in claim 11 or 12, further comprising:
after sliding the second slide mechanism (24, 33; 24, 33, 52; 252; 352) relative to the first slide mechanism (30; 130) in substantially the same direction as the first slide mechanism within the second discrete sliding range, releasably locking (41B) the position of the second slide mechanism relative to the first slide mechanism or the first slide bar (31).

## Patentansprüche

1. Zugsäge (1; 100; 150), mit
einem Tisch (3b), der eine Tischfläche (5b) definiert,
einer Sägeeinheit (20), die vertikal relativ zu der Tischfläche schwenkbar ist,
einem ersten Gleitmechanismus (30; 130) mit einer ersten Gleitstange (31; 51; 251; 351), die die Sägeeinheit mit dein Tisch verbindet, bei dem die erste Gleitstange im Wesentlichen parallel zu der Tischfläche angeordnet ist und bei dem die erste Gleitstange einen ersten Gleitbereich der Sägeeinheit in einer Richtung, die im Wesentlichen parallel zu der Tischfläche ist, definiert, und
einem Gleitmittel (24, 33; 24, 33, 52; 252; 352) zum gleitend bewegbaren Verbinden der ersten Gleitstange mit der Sägeeinheit, bei dem das Gleitmittel einen zweiten Gleitbereich der Sägeeinheit in der Richtung, die im Wesentlichen parallel zu der Tischfläche ist, definiert,
**dadurch gekennzeichnet, dass**
der erste Gleitmechanismus (30; 130) angepasst ist, der Sägeeinheit (20) zu ermöglichen, parallel, oder im Wesentlichen parallel, zu der Tischfläche (5b) innerhalb des ersten Gleitbereichs zum Schneiden eines Werkstücks, das auf dem Tisch (3b) platziert ist, zu gleiten, und
entweder das Gleitmittel (24, 33, 52; 252; 352) eine zweite Gleitstange (52; 252; 352), die gleitend bewegbar in oder um die erste Gleitstange (51; 251; 351) angeordnet ist, aufweist und eine Armhalterung (24) die zweite Gleitstange mit der Sägeeinheit verbindet, oder das Gleitmittel (24, 33) eine Armhalterung (24) aufweist, die gleitend bewegbar mit der ersten Gleitstange (31) verbunden ist,
so dass, zum Schneiden des Werkstücks, die Sägeeinheit innerhalb eines gesamten Gleitbereichs von mindestens dem ersten Gleitbereich zuzüglich dem zweiten Gleitbereich in der Richtung, die im Wesentlichen parallel zu der Tischfläche ist, gleitend bewegbar ist.

2. Zugsäge (1; 100; 150) nach Anspruch 1, bei der die Armhalterung (24) die Sägeeinheit (20) schwenkbar lagert.

3. Zugsäge (1) nach Anspruch 2, bei der das Gleitmittel (24, 33, 52; 252; 352) die zweite Gleitstange (52; 252; 352), die gleitend bewegbar in oder um die erste Gleitstange (51; 251; 351) angeordnet ist, aufweist und die Armhalterung (24) unbeweglich, drehbar oder gleitend bewegbar an dem hinteren Ende der zweiten Gleitstange befestigt ist.

4. Zugsäge (1; 100; 150) nach einem der vorhergehenden Ansprüche, bei der eine erste Gleitstange (31; 51; 251; 351) oder zwei parallele erste Gleitstangen (31; 51; 251; 351) unterhalb der Tischfläche (5b) linear gleitend bewegbar ist/sind.

5. Zugsäge (1; 100; 150) nach einem der vorhergehenden Ansprüche, bei der das Gleitmittel (24, 33; 24, 33, 52) ferner ein Mittel (25, 26) zum lösbaren Verriegeln der Sägeeinheit (20) in einer Schrägschneideposition relativ zu der Tischfläche (5b) aufweist.

6. Zugsäge (1; 100; 150) nach einem der vorhergehenden Ansprüche, ferner mit einem Drehtisch (5), der innerhalb des Tisches (3b) angeordnet ist und drehbar die erste(n) Gleitstange(n) (31; 51; 251; 351) mit dem Tisch verbindet.

7. Zugsäge (1; 100; 150) nach Anspruch 6, bei der
falls das Gleitmittel (24, 33) eine Armhalterung (24) aufweist, die gleitend bewegbar mit der ersten Gleitstange (31) verbunden ist, ein vorderer und hinterer Anschlag (36, 37) innerhalb des Drehtisches (5) definiert sind und der Abstand zwischen dem ersten und zweiten Anschlag (36, 37) den ersten Gleitbereich definiert, oder, falls ein erstes Lagerteil (32) optional zwischen dem ersten und zweiten Anschlag (36, 37) angeordnet ist, der erste Gleitbereich dann durch den Abstand zwischen dem ersten und zweiten Anschlag abzüglich der Länge des ersten Lagerteils definiert wird,
oder, falls das Gleitmittel (24, 33, 52; 252; 352) eine zweite Gleitstange aufweist (52; 252; 352), die gleitend bewegbar in oder um die erste Gleitstange (51; 251; 351) angeordnet ist und eine Armhalterung (24) die zweite Gleitstange an die Sägeeinheit koppelt, ein vorderer und hinterer Anschlag (51a, 51b) an dem äußeren Umfang der ersten Gleitstange(n) (51) angebracht sind und der erste Gleitbereich durch den Abstand zwischen dem ersten und zweiten Anschlag (51a, 51b) abzüglich der Länge eines ersten Lagerungsteils (32), das zwischen den ersten und zweiten Anschlag angeordnet ist, definiert wird, aufweist.

8. Zugsäge (1; 100; 150) nach einem der vorhergehenden Ansprüche, ferner mit einem Gelenk (23), das die Sägeeinheit (20) schwenkbar mit dem Gleitmittel (24, 33; 24, 33, 52) verbindet.

9. Zugsäge (1; 100; 150) nach einem der vorhergehenden Ansprüche, ferner mit einem Mittel (41 B) zum lösbaren Verriegeln der ersten Gleitstange(n) (31) relativ zu dem Gleitmittel (24, 33).

10. Zugsäge (1; 100; 150) nach einem der vorhergehenden Ansprüche, ferner mit einem Mittel (24, 33, 52; 24, 33, 61, 62) zum Definieren eines dritten Gleitbereichs zwischen der Sägeeinheit (20) und dem Tisch (5b).

11. Verfahren zum Schneiden eines auf einem Tisch (3b) angeordneten Werkstücks (W), mit
gleitendes Bewegen einer Sägeeinheit (20) mittels eines ersten Gleitmechanismus (30; 130), der eine erste Gleitstange (31; 51; 251; 351) aufweist, relativ zu dem Tisch in einer Richtung, die im Wesentlichen parallel zu einer Fläche (5b) des Tischs ist, bei dem die erste Gleitstange (31; 51; 251; 351) einen ersten diskreten Gleitbereich der Sägeeinheit (20) in der Richtung, die im Wesentlichen parallel zu der Tischfläche ist, definiert,
**dadurch gekennzeichnet, dass**
der erste Gleitmechanismus (30; 130) der Sägeeinheit (20) ermöglicht, parallel oder im Wesentlichen parallel zu der Tischfläche (5b) innerhalb des ersten diskreten Gleitbereichs zum Schneiden des Werkstücks (W) zu gleiten, und
das Verfahren ferner
ein gleitendes Bewegen eines Gleitmittels (24, 33; 24, 33, 52; 252; 352) relativ zu dem ersten Gleitmechanismus (30; 130) in im Wesentlichen der gleichen Richtung wie die des ersten Gleitmechanismus innerhalb eines zweiten diskreten Gleitbereichs durch entweder gleitendes Bewegen einer zweiten Gleitstange (52; 252; 352), welche in oder um die erste Gleitstange (51; 251; 351) angeordnet ist, relativ zu der ersten Gleitstange oder durch gleitendes Bewegen einer Armhalterung (24), welche gleitend bewegbar mit der ersten Gleitstange (31) verbunden ist, relativ zu der ersten Gleitstange, so dass das Werkstück durch gleitendes Bewegen der Sägeeinheit innerhalb eines gesamten Gleitbereichs von mindestens dem ersten Gleitbereich zuzüglich dem zweiten Gleitbereich in der Richtung, die im Wesentlichen parallel zu der Tischfläche ist, geschnitten wird.

12. Verfahren nach Anspruch 11, ferner mit
lösbarem Verriegeln (41A) der Position des ersten Gleitmechanismus (30) oder der ersten Gleitstange (31) relativ zu dem Tisch nach einem gleitendem Bewegen der Sägeeinheit (20) relativ zu dem Tisch (3b) in der Richtung, die im Wesentlichen parallel zu der Tischfläche (5b) ist, innerhalb des ersten diskreten Gleitbereichs.

13. Verfahren nach Anspruch 11 oder 12, ferner mit
lösbarem Verriegeln (41B) der Position des zweiten Gleitmechanismus relativ zu dem ersten Gleitmechanismus oder der ersten Gleitstange (31) nach einem gleitendem Bewegen des zweiten Gleitmechanismus (24, 33; 24, 33, 52; 252; 352) relativ zu dem ersten Gleitmechanismus (30; 130) in im Wesentlichen der gleichen Richtung wie die des ersten Gleitmechanismus innerhalb des zweiten diskreten Gleitbereichs.

## Revendications

1. Scie coulissante (1 ; 100 ; 150), comprenant :
une table (3b) définissant une surface de table (5b),
une unité de scie (20) capable de pivoter verticalement par rapport à la surface de table,
un premier mécanisme de coulissement (30 ; 130) comprenant une première barre de guidage (31 ; 51 ; 251 ; 351) couplant l'unité de scie à la table, la première barre de guidage étant disposée sensiblement parallèlement à la surface de table, dans laquelle la première barre de guidage définit une première plage de coulissement de l'unité de scie dans une direction sensiblement parallèle à la surface de table, et
des moyens coulissants (24, 33 ; 24, 33, 52 ; 252 ; 352) pour coupler de manière coulissante la première barre de guidage à l'unité de scie, dans laquelle les moyens coulissants définissent une deuxième plage de coulissement de l'unité de scie dans la direction sensiblement parallèle à la surface de table,
**caractérisée en ce que** :
le premier mécanisme de coulissement (30 ; 130) est adapté pour permettre à l'unité de scie (20) de coulisser parallèlement, ou sensiblement parallèlement, à la surface de table (5b) dans la première plage de coulissement afin de couper une pièce (W) placée sur la table (3b), et
soit les moyens coulissants (24, 33, 52 ; 252 ; 352) comprennent une deuxième barre de guidage (52 ; 252 ; 352) disposée de manière coulissante dans ou autour de la première barre de guidage (51 ; 251 ; 351) et un support de bras (24) couple la deuxième barre de guidage à l'unité de scie, soit les moyens coulissants (24, 33) comprennent un support de bras (24) couplé de manière coulissante à la première barre de guidage (31),
de sorte que, pour couper la pièce, l'unité de scie est capable de coulisser dans une plage de coulissement totale d'au moins la première plage de coulissement plus la deuxième plage de coulissement dans la direction sensiblement parallèle à la surface de table.

2. Scie coulissante (1 ; 100 ; 150) selon la revendication 1, dans laquelle le support de bras (24) supporte de manière pivotante l'unité de scie (20).

3. Scie coulissante (1) selon la revendication 2, dans laquelle les moyens coulissants (24, 33, 52 ; 252 ; 352) comprennent la deuxième barre de guidage (52 ; 252 ; 352) disposée de manière coulissante dans ou autour de la première barre de guidage (51 ; 251 ; 351) et le support de bras (24) est fixé fermement, en rotation ou de manière coulissante à l'extrémité arrière de la deuxième barre de guidage.

4. Scie coulissante (1 ; 100 ; 150) selon l'une quelconque des revendications précédentes, dans laquelle une première barre de guidage (31 ; 51 ; 251 ; 351) ou deux premières barres de guidage (31 ; 51 ; 251 ; 351) parallèles sont capables de coulisser linéairement au-dessous de la surface de table (5b).

5. Scie coulissante (1 ; 100 ; 150) selon l'une quelconque des revendications précédentes, dans laquelle les moyens coulissants (24, 33 ; 24, 33, 52) comprennent en outre des moyens (25, 26) pour verrouiller de manière libérable l'unité de scie (20) dans une position de coupe en biseau par rapport à la surface de table (5b).

6. Scie coulissante (1 ; 100 ; 150) selon l'une quelconque des revendications précédentes, comprenant en outre un plateau tournant (5) disposé dans la table (3b) et couplant en rotation la ou les premières barres de guidage (31 ; 51 ; 251 ; 351) à la table.

7. Scie coulissante (1 ; 100 ; 150) selon la revendication 6, dans laquelle :
si les moyens coulissants (24, 33) comprennent un support de bras (24) couplé de manière coulissante à la première barre de guidage (31), des butées avant et arrière (36, 37) sont définies dans le plateau tournant (5) et la distance entre les première et deuxième butées (36, 37) définit la première plage de coulissement ou, si un premier élément de support (32) est disposé optionnellement entre les première et deuxième butées (36, 37), alors la première plage de coulissement est définie par la distance entre les première et deuxième butées moins la longueur du premier élément de support,
ou, si les moyens coulissants (24, 33, 52 ; 252 ; 352) comprennent une deuxième barre de guidage (52 ; 252 ; 352) disposée de manière coulissante dans ou autour de la première barre de guidage (51 ; 251 ; 351) et qu'un support de bras (24) couple la deuxième barre de guidage à l'unité de scie, des butées avant et arrière (51a, 51b) sont fixées à la périphérie extérieure de la ou des premières barres de guidage (51) et la première plage de coulissement est définie par la distance entre les première et deuxième butées (51a, 51 b) moins la longueur d'un premier élément de support (32) disposé entre les première et deuxième butées.

8. Scie coulissante (1 ; 100 ; 150) selon l'une quelconque des revendications précédentes, comprenant en outre une articulation (23) couplant de manière pivotante l'unité de scie (20) aux moyens coulissants (24, 33 ; 24, 33, 52).

9. Scie coulissante (1 ; 100 ; 150) selon l'une quelconque des revendications précédentes, comprenant en outre des moyens (41 B) pour verrouiller de manière libérable la ou les premières barres de guidage (31) par rapport aux moyens coulissants (24, 33).

10. Scie coulissante (1 ; 100 ; 150) selon l'une quelconque des revendications précédentes, comprenant en outre des moyens (24, 33, 52 ; 24, 33, 61, 62) pour définir une troisième plage de coulissement entre l'unité de scie (20) et la table (5b).

11. Procédé de coupe d'une pièce (W) disposée sur une table (3b), comprenant l'étape consistant à :
faire coulisser une unité de scie (20) par l'intermédiaire d'un premier mécanisme de coulissement (30 ; 130) comprenant une première barre de guidage (31 ; 51 ; 251 ; 351) par rapport à la table dans une direction sensiblement parallèle à une surface (5b) de la table, dans lequel la première barre de guidage (31 ; 51 ; 251 ; 351) définit une première plage de coulissement discrète de l'unité de scie (20) dans la direction sensiblement parallèle à la surface de table,
**caractérisé en ce que** :
le premier mécanisme de coulissement (30 ; 130) permet à l'unité de scie (20) de coulisser parallèlement, ou sensiblement parallèlement, à la surface de table (5b) dans la première plage de coulissement discrète afin de couper la pièce (W), et
le procédé comprenant en outre l'étape consistant à :
faire coulisser des moyens coulissants (24, 33 ; 24, 33, 52 ; 252 ; 352) par rapport au premier mécanisme de coulissement (30 ; 130) sensiblement dans la même direction que le premier mécanisme de coulissement dans une deuxième plage de coulissement discrète soit en faisant coulisser une deuxième barre de guidage (52 ; 252 ; 352), qui est disposée dans ou autour de la première barre de guidage (51 ; 251 ; 351), par rapport à la première barre de guidage, soit en faisant coulisser un support de bras (24), qui est couplé de manière coulissante à la première barre de guidage (31), par rapport à la première barre de guidage, de sorte que la pièce soit coupée en faisant coulisser l'unité de scie dans une plage de coulissement totale d'au moins la première plage de coulissement plus la deuxième plage de coulissement dans la direction sensiblement parallèle à la surface de table.

12. Procédé selon la revendication 11, comprenant en outre l'étape consistant à :
après avoir fait coulisser l'unité de scie (20) par rapport à la table (3b) dans la direction sensiblement parallèle à la surface de table (5b) dans la première plage de coulissement discrète, verrouiller de manière libérable (41 A) la position du premier mécanisme de coulissement (30) ou de la première barre de guidage (31) par rapport à la table.

13. Procédé selon la revendication 11 ou 12, comprenant en outre l'étape consistant à:
après avoir fait coulisser le deuxième mécanisme de coulissement (24, 33 ; 24, 33, 52 ; 252 ; 352) par rapport au premier mécanisme de coulissement (30 ; 130) sensiblement dans la même direction que le premier mécanisme de coulissement dans la deuxième plage de coulissement discrète, verrouiller de manière libérable (41 B) la position du deuxième mécanisme de coulissement par rapport au premier mécanisme de coulissement ou à la première barre de guidage (31).
